# EUROPEAN PATENT SPECIFICATION

(11) **EP 2 925 972 B1**
(45) Date of publication and mention of the grant of the patent: **02.01.2019**
(21) Application number: 13858445.3
(22) Date of filing: 25.11.2013
(51) Int. Cl.: G06T 7/00, F01D 21/00, F01D 5/02, G01N 21/88

(54) **TURBOFAN WITH OPTICAL DIAGNOSTIC CAPABILITIES**
TURBOLÜFTER MIT OPTISCHER DIAGNOSEFUNKTION
RÉACTEUR À DOUBLE FLUX À CAPACITÉS DE DIAGNOSTIC OPTIQUE

(30) Priority: 28.11.2012 US 201261730609 P
(43) Date of publication of application: 07.10.2015
(73) Proprietor: United Technologies Corporation, Farmington, CT 06032 (US)
(72) Inventor: ROSENKRANS, William E., Naples, FL 34120 (US); SCHWARZ, Frederick M., Glastonbury, Connecticut 06033 (US)
(74) Representative: Dehns
(86) International application number: PCT/US2013/071601
(87) International publication number: WO 2014/085292

(56) References cited:
- EP-A2- 2 390 471
- EP-A2- 2 402 562
- JP-A- H0 262 524
- JP-A- H07 113 749
- JP-A- H07 113 749
- US-A1- 2004 183 900
- US-A1- 2008 250 860
- US-A1- 2009 148 287
- US-A1- 2010 232 974

## Description

### BACKGROUND

This application relates to a diagnostics system and a method incorporated into a gas turbine engine.

Gas turbine engines are known and, typically, include a fan delivering air both as bypass air for propulsion and into a compressor. The compressor section includes rotors which rotate to compress air and deliver it into a combustor. The air is mixed with fuel and ignited in the combustor and products of the combustion pass downstream over turbine rotors, driving them to rotate.

There are any number of challenges to gas turbine engines when utilized in an aircraft. As an example, birds may impact and damage the fan blades. In addition, solid elements, such as rocks, may be ingested by the fan into the engine and can damage the compressor rotors.

Historically, the fan has rotated at one speed with a compressor rotor. This limited the size of the fan for several reasons. More recently, it has been proposed to incorporate a gear reduction between the fan rotor and the compressor rotor.

With this change, the diameter of the fan rotor has increased dramatically and the speed of the fan rotor has decreased. This raises challenges with regard to the damage events mentioned above.

As the fan diameter has increased, the potential for bird strikes also increases. Further, as the fan speed decreases, the likelihood of rocks or other large items passing beyond the fan rotor and impacting the compressor rotor also increases.

Should any of the damage events mentioned above occur, it would be desirable to quickly identify the damage, such that maintenance or other proactive steps can be initiated. Various types of diagnostic systems have been proposed, but have generally been related to the used of vibration detection.

Image recognition software is known and has been utilized in any number of applications. As an example, image recognition software has been proposed for use in identifying structural cracks after earthquakes.

JP 07113749 relates to a turbine blade inspection system. EP 2390471 and EP 2402562 relate to systems for monitoring blades.

### SUMMARY

In a featured embodiment, there is provided a gas turbine engine including a system for diagnosing a rotating airfoil according to claim 1.

In another featured embodiment, a method of diagnosing damage to a rotating airfoil of a gas turbine engine according to claim 8 is featured.

These and other features may be best understood from the following drawings and specification.

### BRIEF DESCRIPTION OF THE DRAWINGS

Figure 1 schematically shows a gas turbine engine.
Figure 2 schematically shows details of a portion of a gas turbine engine.
Figure 3A shows damage to a fan blade.
Figure 3B shows another view of the damaged blades.
Figure 4A shows a diagnostic system for identifying damage.
Figure 4B shows optional features.
Figure 5 shows another embodiment.

### DETAILED DESCRIPTION

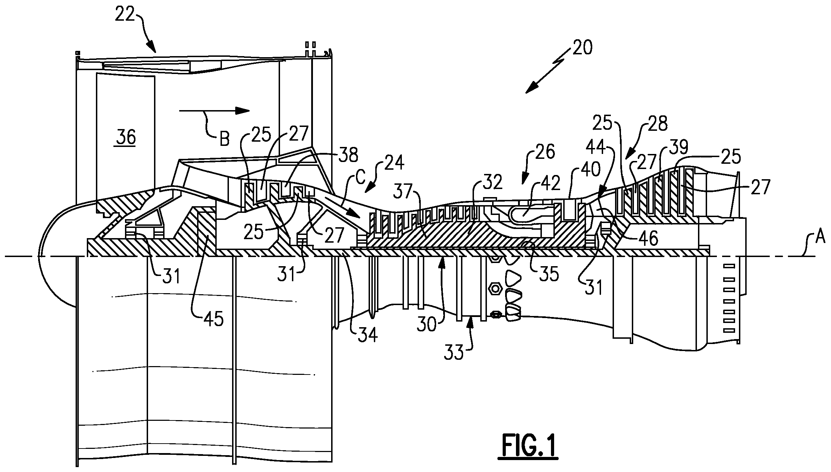

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10668 meters (35000 feet). The flight condition of 0.8 Mach and 10668 meters (35000 feet), with the engine at its best fuel consumption - also known as "bucket cruise Thrust Specific Fuel Consumption ('TSFC')" - is the industry standard parameter of 1bm of fuel being burned divided by 1bf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in m/s divided by an industry standard temperature correction of [(Tram °R) / (518.7 °R)]^{0.5}. The "Low corrected fan tip speed" as disclosed herein according to one non-limiting embodiment is less than about 350 m/s (1150 ft/s).

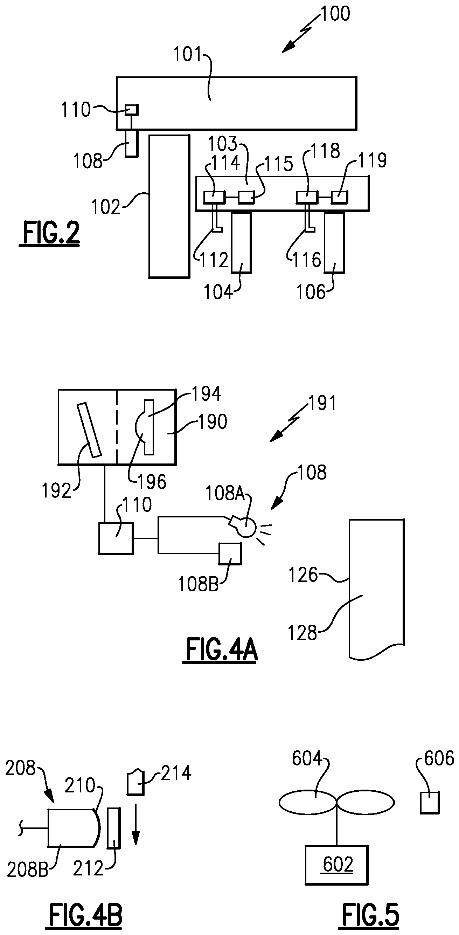

Figure 2 shows an example engine 100 which may be generally constructed as engine 10. An outer nacelle 101 surrounds a large fan blade 102. Downstream, a low pressure compressor first stage 104 and a high pressure compressor first stage 106 are spaced further inwardly.

A camera system 108 may communicate with a computer control 110 for analyzing the health of the fan 102, as described below.

An optic fiber 112 may be positioned to transmit images of the health of the compressor first stage 104 to a camera system 114 and communicates with a computer control 115. Similarly, an optic fiber 116 may monitor the health of the first stage high pressure rotor 106. The optical fiber 116 is shown communicating with a camera system 118 for capturing images and communicating with the computer control 119. In this embodiment, the optical fibers 112 and 116 allow the camera systems 114/118 and controls 115/119 to be positioned within a core housing 103 and, thus, better protected. In practice, the controls 110/115/119 may be combined as a single control. The image capture and analysis described below occurs during flight and other operation of the engine.

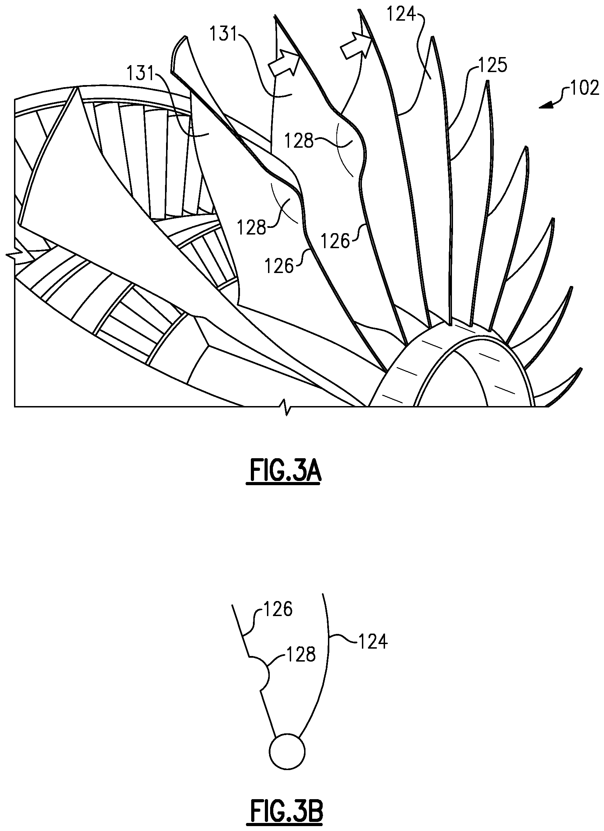

Figure 3A shows one type of damage that can occur to a fan 102. As shown, there are a plurality of blades spaced circumferentially. A first blade 125 is shown to be undamaged and to have a predictable and smooth curve on a leading edge 124. The leading edge 126 of adjacent blades 131 are shown to have a damaged portion 128. This may be caused by a bird strike or a strike by some other item. As shown, the damaged area 128 includes a bend such that the leading edge 126 is no longer smooth. Figure 3B more dramatically shows the bend schematically.

Figure 4A shows a system 191 which will monitor the blade leading edges 124 and 126. It should be understood that a similar system would be utilized with the first stage rotors 104 and 106. As shown, the camera 108 system actually includes a camera 108B for capturing an image and a light 108A. The light 108A may be a strobe timed to flash each revolution or even uniformly synced to each blade's passing to capture the image of the leading edge 126/125 of each of the plurality of rotating fan blades 124/131. Alternatively, a digital shutter on the camera 108B may be so timed. The control 110 is programmed to provide images of the blade periodically, such that the leading edge of each of the blades is monitored during operation of the engine.

A visual display 190, such as a computer display, is shown including an image 192 of an expected leading edge 126 and an image 194 of the actual leading edge having the damaged area 196. The damaged area 196 shows clearly as a "glint" to image recognition software programmed into the computer control 110. Computer control 110 can be programmed to identify damage, such as the bird strike damage 128. Alternatively, digital data about the glint, such as angle of small segments of the glint along the leading edge can be programmed and changes noted for either a safe shutdown of the engine or a maintenance message can be sent requesting on-wing blending of the defect if it is digitally determined to be small.

Further, the software may be programmed to identify the actual time of arrival of any of the leading edges compared to an expected time of arrival. This would also be indicative of large-scale potential damage such as a crack in the root attachment or even the disk lugs. Further, the software may be programmed to identify cracks in most areas of the airfoil. Over time, such software can identify an increase in the size of the cracks and an increase in the departure of the arrival time from the expected arrival time. All of this information can be utilized to schedule maintenance or even shut down of the engine depending on the severity of the damage.

The glint will typically have a role and there may be other readily profiled areas with a baseline geometry stored in the system and possibly some adjustments to the baseline geometry to adjust for engine acceleration, deceleration, altitude and power. Staying with the glint for example, it has a certain time of arrival relative to a reference feature that is freezing the blade in one position. A maintenance flag is set if the line of the glint, along one small section of the blade deviates from the line of the glint elsewhere. In another example, the system may call for an in-flight shutdown if large sections of the glint were distorted relative to other parts of the blade or if the entire glint arrived late, indicating that the entire blade was coming loose due to some major attachment area distress.

Figure 4B shows an alternative camera system 208. The cameras 208B have a curved forward face 210. Protective glass 212 may be positioned to protect the camera 208B. Further, as a second alternative, an air curtain 214 may be created to clean the glass 212 or the forward face 210 of the camera should glass 212 not be utilized.

Figure 5 shows alternative embodiments 600. In alternative embodiments 600, the system for diagnosing a rotating airfoil 606 is associated with something other than internal rotors within a gas turbine engine. As an example, the system 602 could be a helicopter, a turboprop engine, or even an F-135 lift fan. In such systems, the rotating airfoil 604 could be the propeller, and any propeller location on a helicopter, or could be the F-135 lift fan. A vertical flight segment has a chance of bird strike, or other system failure, and thus the application of the system 606 to such locations provides valuable benefits.

Image recognition software is known and commercially available. An appropriate program can be tailored to achieve the goals of this disclosure utilizing only the commercially available software.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A gas turbine engine including a system for diagnosing a rotating airfoil, comprising:
an image capture device (108A) extending from a housing and a light emitting device (108B); and
a control, said control being programmed to actuate at least one of said image capture device (108A) and said light emitting device
(108B) at a particular time to capture an image of a rotating airfoil being monitored, and then compare said captured image to an expected image,
**characterised in that** said image capture device and said light emitting device are mounted within the gas turbine engine and are configured to capture the images during flight operation.

2. The gas turbine engine as set forth in claim 1, wherein said control also compares an expected time of arrival of a leading edge of the rotating airfoil to the actual time of arrival.

3. The gas turbine engine as set forth in claim 1 or 2, wherein said control identifies cracks on the rotating airfoil utilizing the captured image, and optionally wherein the size of an expected crack is compared to prior captured image over time to identify a growth of a crack.

4. The gas turbine engine as set forth in any preceding claim, wherein said system is utilized with at least one of a rotating fan blade, a first stage of a low pressure compressor and a first stage of a high pressure compressor.

5. The gas turbine engine as set forth in claim 4, wherein said system is associated with each of said fan blades and said low and high pressure compressor first stage rotors, and optionally wherein a gear reduction is placed between said fan rotor and said low pressure compressor rotor.

6. The gas turbine engine as set forth in any preceding claim, wherein an air curtain is passed along said image capture device to clean said image capture device.

7. The gas turbine engine as set forth in any preceding claim, wherein protective glass is positioned between said image capture device and said rotating blade.

8. A method of diagnosing damage to a rotating airfoil of a gas turbine engine using the system of any preceding claim, said method comprising the steps of:
illuminating a rotating blade with a light emitting device at a controlled time and capturing a digital image of the illuminated leading edge with a capture device and
comparing said captured image of said rotating blade to an expected image, and utilizing image recognition software to identify defects in said rotating blade, wherein said image capture device and said light emitting device are mounted within said gas turbine engine and capture images during flight operation.

9. The method or system as set forth in any preceding claim, wherein said system is provided with a strobe light as said light emitting device,
and said strobe light being actuated in a timed manner to capture the leading edges.

10. The method or system as set forth in any preceding claim, wherein said image capture device is a camera provided with a digital shutter timed to capture the rotating blade at an expected time.

11. The method as set forth in claims 8-10,
wherein said rotating blade is at least one of a
rotating fan blade, a first stage of a low pressure compressor and a first stage of a high pressure compressor, and optionally wherein said rotating blade includes each of said rotating fan blade, said first stage of a low pressure compressor, and said first stage of a high pressure compressor.

12. The method or system as set forth in any preceding claim, wherein said captured image of said rotating blade is of a leading edge of said rotating blade.

13. The method or system as set forth in any preceding claim, wherein said rotating airfoil is:
a propeller in a turboprop engine; a
propeller on a helicopter; or
part of a lift fan.

## Patentansprüche

1. Gasturbinentriebwerk, beinhaltend ein System zur Diagnose eines rotierenden Schaufelblatts, umfassend:
eine Bilderfassungsvorrichtung (108A), die sich von einem Gehäuse erstreckt, und eine lichtemittierende Vorrichtung (108B); und
eine Steuerung, wobei die Steuerung programmiert ist, um zumindest eines von der Bilderfassungsvorrichtung (108A) und der lichtemittierenden Vorrichtung (108B) zu einem bestimmten Zeitpunkt zu betätigen, um ein Bild eines überwachten rotierenden Schaufelblatts zu erfassen, und das erfasste Bild dann mit einem erwarteten Bild zu vergleichen,
**dadurch gekennzeichnet, dass** die Bilderfassungsvorrichtung und die lichtemittierende Vorrichtung in dem Gasturbinentriebwerk angebracht und konfiguriert sind, um die Bilder während eines Flugvorgangs zu erfassen.

2. Gasturbinentriebwerk nach Anspruch 1, wobei die Steuerung außerdem eine erwartete Ankunftszeit einer Vorderkante des rotierenden Schaufelblatts mit einer tatsächlichen Ankunftszeit vergleicht.

3. Gasturbinentriebwerk nach Anspruch 1 oder 2, wobei die Steuerung unter Verwendung des erfassten Bildes Risse in dem rotierenden Schaufelblatt identifiziert und wobei die Größe eines erwarteten Risses gegebenenfalls mit einem vorangehend erfassten Bild im Zeitverlauf verglichen wird, um ein Vergrößern eines Risses zu identifizieren.

4. Gasturbinentriebwerk nach einem der vorangehenden Ansprüche, wobei das System mit zumindest einem von einer rotierenden Gebläseschaufel, einer ersten Stufe eines Niederdruckverdichters und einer ersten Stufe eines Hochdruckverdichters verwendet wird.

5. Gasturbinentriebwerk nach Anspruch 4, wobei das System jedem von den Gebläseschaufeln und den Rotoren des Niederdruck- und Hochdruckverdichters erster Stufe zugeordnet ist und wobei gegebenenfalls eine Getriebeuntersetzung zwischen dem Gebläserotor und dem Rotor des Niederdruckverdichters angeordnet ist.

6. Gasturbinentriebwerk nach einem der vorangehenden Ansprüche, wobei ein Luftvorhang entlang der Bilderfassungsvorrichtung geführt wird, um die Bilderfassungsvorrichtung zu reinigen.

7. Gasturbinentriebwerk nach einem der vorangehenden Ansprüche, wobei Schutzglas zwischen der Bilderfassungsvorrichtung und die rotierende Schaufel angeordnet ist.

8. Verfahren zur Diagnose einer Beschädigung eines rotierenden Schaufelblatts eines Gasturbinentriebwerks unter Verwendung des Systems nach einem der vorangehenden Ansprüche, wobei das Verfahren die folgenden Schritte umfasst:
Beleuchten einer rotierenden Schaufel mit einer lichtemittierenden Vorrichtung zu einem kontrollierten Zeitpunkt und Erfassen eines digitalen Bildes der beleuchteten Vorderkante mit einer Erfassungsvorrichtung
und Vergleichen des erfassten Bildes der rotierenden Schaufel mit einem erwarteten Bild und Verwenden von Bilderkennungssoftware, um Fehler der rotierenden Schaufel zu identifizieren, wobei die Bilderfassungsvorrichtung und die lichtemittierende Vorrichtung in dem Gasturbinentriebwerk angebracht sind und während eines Flugvorgangs Bilder erfassen.

9. Verfahren oder System nach einem der vorangehenden Ansprüche, wobei das System mit einer Stroboskopleuchte als die lichtemittierende Vorrichtung bereitgestellt ist und die Stroboskopleuchte auf zeitgesteuerte Weise betätigt wird, um die Vorderkanten zu erfassen.

10. Verfahren oder System nach einem der vorangehenden Ansprüche, wobei die Bilderfassungsvorrichtung eine Kamera ist, die mit einem digitalen Verschluss bereitgestellt ist, der abgestimmt ist, um die rotierende Schaufel zu einem erwarteten Zeitpunkt zu erfassen.

11. Verfahren nach einem der Ansprüche 8-10, wobei die rotierende Schaufel zumindest eines von einer rotierenden Gebläseschaufel, einer ersten Stufe eines Niederdruckverdichters und einer ersten Stufe eines Hochdruckverdichters ist und wobei die rotierende Schaufel gegebenenfalls jedes von der rotierenden Gebläseschaufel, der ersten Stufe des Niederdruckverdichters und der ersten Stufe des Hochdruckverdichters beinhaltet.

12. Verfahren oder System nach einem der vorangehenden Ansprüche, wobei das erfasste Bild von der rotierenden Schaufel von einer Vorderkante der rotierenden Schaufel ist.

13. Verfahren oder System nach einem der vorangehenden Ansprüche, wobei das rotierende Schaufelblatt Folgendes ist:
ein Propeller eines Turboprop-Triebwerks;
ein Propeller eines Helikopters; oder
ein Teil eines Hubgebläses.

## Revendications

1. Turbine à gaz comprenant un système permettant de diagnostiquer une surface portante rotative comprenant :
un dispositif de capture d'image (108A) s'étendant à partir d'un boîtier et d'un dispositif d'émission de lumière (108B) ; et
une commande, ladite commande étant programmée pour actionner au moins l'un dudit dispositif de capture d'image (108A) et dudit dispositif d'émission de lumière (108B) à un moment particulier pour capturer une image d'une surface portante rotative qui est surveillée, puis comparer ladite image capturée à une image attendue,
**caractérisée en ce que** ledit dispositif de capture d'image et ledit dispositif d'émission de lumière sont montés à l'intérieur de la turbine à gaz et sont configurés pour capturer les images durant l'opération de vol.

2. Turbine à gaz selon la revendication 1, dans laquelle ladite commande compare également un moment d'arrivée attendu d'un bord d'attaque de la surface portante rotative au moment d'arrivée réel.

3. Turbine à gaz selon la revendication 1 ou 2, dans laquelle ladite commande identifie des fissures sur la surface portante rotative à l'aide de l'image capturée, et éventuellement dans laquelle la taille d'une fissure attendue est comparée à une image capturée au préalable au fil du temps pour identifier une augmentation d'une fissure.

4. Turbine à gaz selon une quelconque revendication précédente, dans laquelle ledit système est utilisé avec au moins l'un d'une pale de ventilateur rotative, d'un premier étage d'un compresseur basse pression et d'un premier étage d'un compresseur haute pression.

5. Turbine à gaz selon la revendication 4, dans laquelle ledit système est associé à chacun desdites pales de ventilateur et desdits rotors de premier étage de compresseur basse et haute pression, et éventuellement dans laquelle un engrenage réducteur est placé entre ledit rotor de ventilateur et ledit rotor de compresseur basse pression.

6. Turbine à gaz selon une quelconque revendication précédente, dans laquelle un rideau d'air est passé le long dudit dispositif de capture d'image pour nettoyer ledit dispositif de capture d'image.

7. Turbine à gaz selon une quelconque revendication précédente, dans laquelle un verre de protection est positionné entre ledit dispositif de capture d'image et ladite pale rotative.

8. Procédé de diagnostic de dégâts d'une surface portante rotative d'une turbine à gaz utilisant le système d'une quelconque revendication précédente, ledit procédé comprenant les étapes consistant à :
éclairer une pale rotative avec un dispositif d'émission de lumière à un moment commandé et capturer une image numérique du bord d'attaque éclairé avec un dispositif de capture et
comparer ladite image capturée de ladite pale rotative à une image attendue, et utiliser un logiciel de reconnaissance d'images pour identifier des défauts dans ladite pale rotative, dans lequel ledit dispositif de capture d'image et ledit dispositif d'émission de lumière sont montés à l'intérieur de ladite turbine à gaz et capturent des images durant l'opération de vol.

9. Procédé ou système selon une quelconque revendication précédente, dans lesquels ledit système est doté d'une lumière stroboscopique faisant office dudit dispositif d'émission de lumière, et ladite lumière stroboscopique étant actionnée de manière prévue pour capturer les bords d'attaque.

10. Procédé ou système selon une quelconque revendication précédente, dans lesquels ledit dispositif de capture d'image est un appareil photo doté d'un obturateur numérique prévu pour capturer la pale rotative à un moment attendu.

11. Procédé selon les revendications 8 à 10, dans lequel ladite pale rotative est au moins l'un d'une pale de ventilateur rotative, d'un premier étage d'un compresseur basse pression et d'un premier étage d'un compresseur haute pression, et éventuellement dans lequel ladite pale rotative comprend chacun de ladite pale de ventilateur rotative, dudit premier étage d'un compresseur basse pression, et dudit premier étage d'un compresseur haute pression.

12. Procédé ou système selon une quelconque revendication précédente, dans lesquels ladite image capturée de ladite pale rotative est d'un bord d'attaque de ladite pale rotative.

13. Procédé ou système selon une quelconque revendication précédente, dans lesquels ladite surface portante rotative est :
une hélice dans un turbopropulseur ;
une hélice sur un hélicoptère ; ou
une partie d'un ventilateur de sustentation.
